# EUROPEAN PATENT APPLICATION

(11) **EP 4 811 222 A1**
(43) Date of publication of application: **23.09.2026**
(21) Application number: 25164812.7
(22) Date of filing: 19.03.2025
(51) Int. Cl.: G06N 10/40

(54) **ARCHITECTURE FOR PARALLEL CONTROL OF QUBITS WITH AN OPTICAL INTERFACE**

(71) Applicant: Nederlandse Organisatie voor Toegepast-Natuurwetenschappelijk Onderzoek TNO, 2595 DA 's-Gravenhage (NL)
(72) Inventor: The designation of the inventor has not yet been filed
(74) Representative: Nederlandsch Octrooibureau

(57) **Abstract**

System for parallel control and readout of a plurality of qubits in a solid-state substrate, the system comprising the solid-state substrate comprising the plurality of qubits positioned in an arbitrary pattern, an excitation path comprising an array of light generating elements, wherein positions of the light generating elements correspond to positions of the plurality of qubits, a collection path comprising an array of light collecting elements, wherein positions of the light collecting elements correspond to the positions of the plurality of qubits, and a beam splitter configured to combine the excitation path and the optical collection path

## Description

### FIELD OF THE INVENTION

The invention relates to a system and method for controlling and/or reading out multiple qubits with an optical interface in solid state materials in parallel.

### BACKGROUND OF THE INVENTION

Color centers in solid state materials like diamond, silicon carbide (SiC) or silicon, are considered as the most promising route towards a hardware platform for future quantum internet applications, and potentially even for quantum computing applications. Respectively for the quantum internet and quantum computing applications the key performance indicators are the rate with which entangled photons can be emitted, and the number of qubits that can be addressed. Both parameters can be improved by enabling more color centers that can be controlled in parallel, in the same cryostat.

Currently most of the experiments are performed on a single color center that is located in a cryostat, with an optical table full of optics to control the color center and collect the entangled photons that are emitted by the color center, as for instance in "Experimental loophole-free violation of a Bell inequality using entangled electron spins separated by 1.3 km", by B. Hensen, (2015). In practice most samples contain multiple color centers, but the free space optics just do not easily allow to control them in parallel.

To enable the parallel control over multiple color centers, research is taking place on Quantum Integrated Photonics (QPIC), see for instance "Large-scale integration of artificial atoms in hybrid photonic circuits"", by Wan, N.H., Lu, TJ., Chen, K.C. et al. Nature 583, 226-231 (2020). However, there are still many challenges to be solved such as:
- The performance of some types of color centers is deteriorated when embedded in a QPIC device.
- There are several optical functions that are difficult to implement with the same performance level in a QPIC, like polarization control and suppression of excitation light.
- It is difficult to reduce the optical losses in a QPIC device to acceptable levels, especially due to the required hybrid integration.

To improve parallel control of multiple color centers based on free space optics, one option could be to copy the free space setups as being used to control trapped atoms as indicated in "Array of Individual Circular Rydberg Atoms Trapped in Optical Tweezer" by B. Ravon, P. Méhaignerie, Y. Machu, A. Durán Hernández, M. Favier, J. M. Raimond, M. Brune, and C. Sayrin, Phys. Rev. Lett. 131, 093401, Published 30 August 2023. These setups are mostly based on Acoustic Optic Modulators (AOMs) and/or Spatial Light Modulators (SLMs) to split the laser light into multiple beams. These setups offer a flexibility that is required for the control of the trapped atoms, but not needed for color centers in a solid-state material. Also, this flexibility comes with a price when it comes to performance on other aspects.

### SUMMARY OF THE INVENTION

According to a first aspect of the invention, a system for parallel control and readout of a plurality of qubits in a solid-state substrate, the system comprising the solid-state substrate comprising the plurality of qubits positioned in an arbitrary pattern, an excitation path comprising an array of light generating elements, wherein positions of the light generating elements correspond to positions of the plurality of qubits, a collection path comprising an array of light collecting elements, wherein positions of the light collecting elements correspond to the positions of the plurality of qubits, and a beam splitter configured to combine the excitation path and the optical collection path. This provides parallelism for controlling and detecting the qubits, thereby providing a faster and more efficient system. The qubits can be any type of qubit with an optical interface like for example color centers (for example in diamond, SiC or silicon) quantum dots or spin-defect qubits in two-dimensional transition metal dichalcogenides.

The system may further comprise an array of individual microwave antennas, each respectively corresponding to each of the plurality of qubits.

The position of the qubits in the solid-state substrate may be determined as part of the fabrication/preparation of the solid-state substrate (for instance, diamond). A solid immersion lens or a micro cavity may be built around each of the individual qubits or color centers that need to be controlled. Also, a micro-wave antenna may be placed as close as possible to the individual qubits.

Alternatively, the system may further comprise a single antenna and an integrated configuration of electromagnetic coils or wires for applying a magnetic field gradient to induce Zeeman splitting of the plurality of qubits.

A distance between any two qubits among the plurality of qubits may be between 10 micrometer and 100 micrometers. However, the distance between any two qubits may be any suitable distance. Moreover, the distance between each pair of qubits may be different or the same.

The excitation path may further comprise a plurality of light sources and optical switches for time multiplexing of the light sources as part of the light emitting elements such that light required to control the color centers can be generated at the positions corresponding to the color centers. This provides a very efficient system because the same light sources can be shared among all color centers. However, the light coming from the light sources may be multiplexed in any suitable way.

The excitation path may further comprise outcoupling gratings acting as the light emitting elements. The location of the outcoupling gratings respectively corresponds to the location of the color centers. The location of the color centers or qubits may be measured during the preparation of the diamond sample. For improved accuracy the location of the outcoupling gratings could also be measured by placing a camera at the location of the collection gratings 160, because the positions of outcoupling gratings and the collection gratings should be the same. In this way, the positions of the light sources of the excitation path correspond to the positions of the plurality of qubits.

The collection path may further comprise optical switches for time multiplexing collected light into a single mode output structure.

The collection path may be configured to direct collected light to a single photon detector 148.

The beam splitter may be a polarizing beam splitter.

The electromagnetic coils or wires may be made of a superconducting material.

The solid-state substrate may be made of diamond, silicon carbide (SiC), or silicon. However, the solid-state substrate may be made of any suitable material or combination of materials.

The invention further relates to a method for controlling a plurality of qubits in a solid-state substrate, the method comprising optically exciting the plurality of qubits using an array of light emitting elements, wherein positions of the light emitting elements correspond to the positions of the plurality of qubits.

The invention further relates to a method for reading out a plurality of qubits in a solid-state substrate, the method comprising collecting photons emitted by the plurality of color centers using an array of collecting elements, wherein positions of the collecting elements correspond to the positions of the plurality of qubits.

### BRIEF DESCRIPTION OF THE DRAWINGS

The invention will be described further with respect to embodiments shown in the drawings.
FIG. 1 shows a system for parallel control and/or readout of a plurality of qubits in a solid-state substrate according to an embodiment of the invention.
FIGs. 2A and 2C show two configurations of electromagnetic coils to control the Zeeman splitting of the individual qubits.
FIG. 3A shows a flowchart of a method for controlling a plurality of qubits in a solid-state substrate according to an embodiment of the invention.
FIG. 3B shows a flowchart of a method for detecting a plurality of qubits in a solid-state substrate according to an embodiment of the invention.

### DESCRIPTION

The following is a description of certain embodiments of the invention, given by way of example only and with reference to the figures. It is also to be understood that the terminology used herein is for the purpose of describing particular aspects only and is not intended to be limiting.

Optical microscope objectives usually used have a field of view that would allow to control a plurality of color centers when located close to each other on the solid-state substrate. Also, most of the free space optics support multiple color centers. Currently the limitations come from the modules responsible for the optical control and the optical collection of the light emitted by the color centers.

The solid-state substrate 102 comprises a plurality of qubits 104 that can be positioned in a row, in an array or at arbitrary locations. The typical field of view of a standard microscope objective varies from 250 micrometers (µm) (100 x, Numerical Aperture (NA) ≈ 0.9) to 2.5 millimeters (mm) (10 x, NA ≈ 0.3), wherein the numerical aperture is defined as the sine of the opening angle relative to the optical axis of the light collection. The high NA will be required if the qubits 104 emit over a large angle, for example when using solid immersion lenses (SIL). The low NA option can be used when the qubits 104 emit in a limited solid angle, for example by using optical micro cavities that emit the light out of the plane of the solid-state substrate 102. For that reason, the pitch between the qubits 104 on the solid-state substrate 102 can vary between 10 µm (for SIL) and a few tens of micrometers (for optical micro cavity), allowing to place at least 25 qubits 104 on a single line, and several hundred of qubits 104 in total.

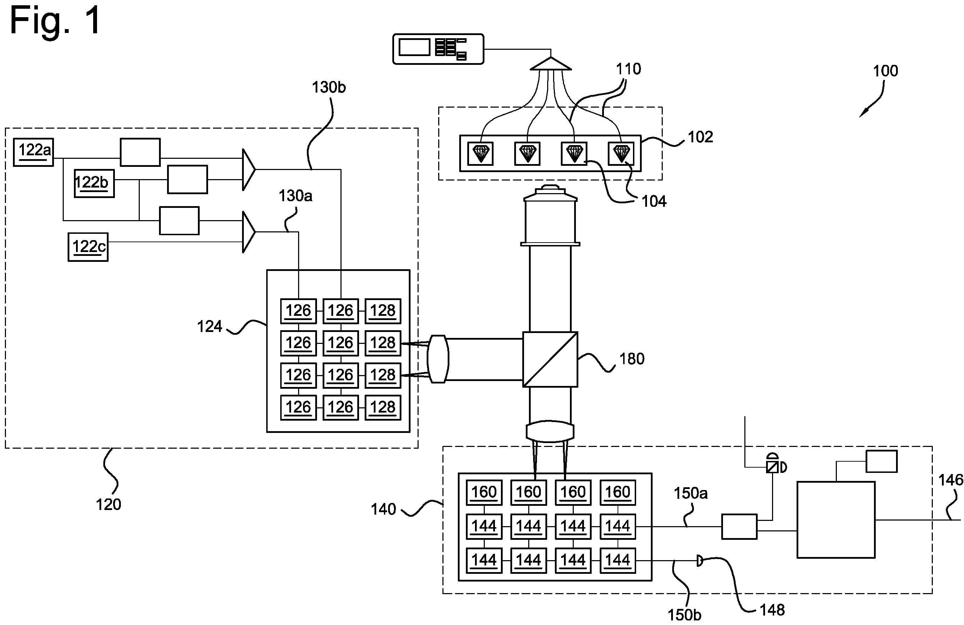

Fig. 1 shows a system 100 for parallel control and readout of a plurality of qubits 104 in a solid-state substrate 102. The system 100 shown in Fig. 1 comprises a solid-state substrate 102 comprising a plurality of qubits 104 positioned in an arbitrary pattern.

The system 100 of Fig. 1 also comprises an excitation path 120 comprising an array of light emitting elements 128. The positions of the light emitting elements 128 in Fig. 1 correspond to the positions of the plurality of qubits 104 in the solid-sate substrate 102.

The system 100 of Fig. 1 comprises further a collection path 140 comprising an array of optical collecting elements 160. The positions of the collecting elements 160 in Fig. 1 correspond to the positions of the plurality of qubits 104 in the solid-sate substrate 102.

The system 100 of Fig. 1 also comprises a beam splitter 180 configured to combine the excitation path 120 and the optical collection path 140.

Besides the optical control, the qubits 104 also require Microwave (MW) control. Optionally Radio Frequency (RF) control may be as well required for controlling nuclear spins that are in the neighborhood of the electron spin that is controlled by the Microwaves. This will add control over additional qubits that can be used as quantum memories

As examples for the MW control of individual qubits 104 that are located close to each other, several options are possible.

One option is having all qubits 104 at the same MW frequency, which will happen by default, when the qubits 104 experience the same magnetic field strength. For individual control of each qubit the system 100 would require then an individual MW antenna for each of the qubits 104.

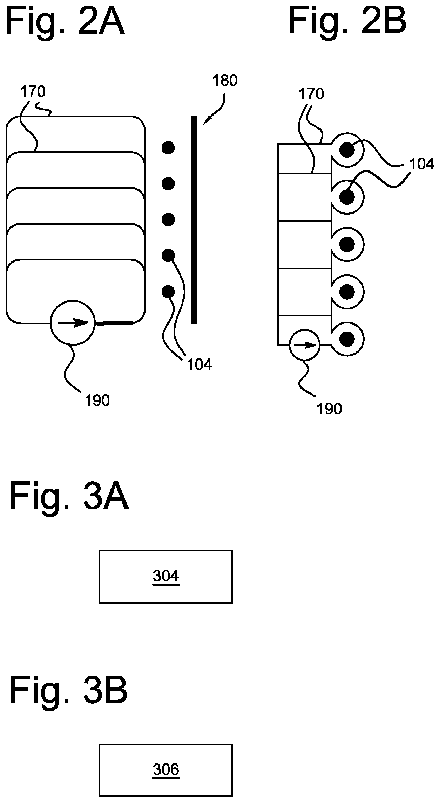

An alternative for the MW control of the qubits is to apply a magnetic field in such a way that at least nearby qubits 104 will have a different MW driving frequency, caused by the Zeeman splitting. This approach solves potential cross-talk problems between neighboring qubits 104, and also reduces the number of MW wires 110 that is required. In this case, the system 100 would comprise a single antenna 180, a current source 190 and an integrated configuration of electromagnetic coils or wires 170 for applying a magnetic field gradient to induce Zeeman splitting of the plurality of qubits as shown in Figs. 2A and 2B.

A combination of both embodiments would also be possible, such that Zeeman splitting is applied to one or more subsets of the plurality of qubits 104 and each subset shares an MW antenna.

In order to have the MW frequencies of the qubits 104 at least 10 Megahertz (MHz) apart, a difference in magnetic field strength (along the dipole axis of the qubits 104) might be applied of at least 4 Gauss. Magnetic field gradients can be realized by using permanent (micro) magnets. As shown in Fig. 2, more control however is provided when using a configuration of electromagnetic coils or wires 170 that can be integrated on the solid-state substrate 102. By either actively controlling the currents or by using passive current dividers it will be possible to control the Zeeman splitting of the individual qubits 104.

In order to limit the heat dissipation from the coils 170 (typical current through coils 170 is up to 1 Amp (A)) it is preferred to use a coil material that is superconducting at the operational temperature of the qubits 104. Examples of suitable materials for the coils 170 that are superconducting are niobium nitride NbN, (critical temperature (Tc) = 16 Kelvin (K)), niobium titanium NbTi (Tc = 10 K), niobium tin Nb₃Sn, (Tc = 18 K) and titanium nitride TiN, (Tc = 5.6 K).

### The excitation path

The excitation path 120 of the system 100 in Fig. 1 comprises an array of light emitters 128 arranged in a plane optically conjugated to the solid-state substrate 102 comprising the qubits 104. That is, the position of the light sources 128 should match the position of the qubits 104 in the solid-state substrate 102.

By choosing a convenient optical magnification different technologies are possible for the array of light sources 128. For example, and as shown in Fig. 1, a micro-optical bench or a Photonic Integrated Circuit (PIC) 124 can be used. Within each technology there are multiple options for the different required functionalities. Outcoupling of the light, for example can be done using vertical grating couplers 128 (as shown in Fig. 1) or 3D printed optical structures.

Ideally there will be individual control over the divergence of the optical beams, in order to control the axial position of the focus on the solid-state substrate 102. The desired beam divergence values may be measured in a similar way as the positions of the color centers 104. If a PIC is used, the design of the PIC should be customized for the positions and divergences of the specific solid-state substrate 102. When 3D printed optics are used, the position and shape of the different elements of the 3D printed optics should be programmed accordingly.

The excitation path 120 may comprise optical switches 126, for example MEMS based, that may be added to allow the multiplexing of the lasers 122a, 122b and 122c among the different qubits 104.

The system 100 of FIG. 1 comprises two laser inputs 130a and 130b. This allows for independent operation for two different functions. One is the optical charge control and resonance check of the qubits 104 provided through the laser input 130a, and the other is the qubit control (spin initialization, entanglement generation and readout) of the qubits 104 provided through the laser input 130b.

### The collection path

The system 100 of FIG. 1 comprises further a collection path 140 that might be similar to the excitation path 120. The collection path 140 in FIG. 1 may comprise an array of collecting elements 160 located in a conjugate plane of the solid-state substrate 102, such that the positions of the individual collecting elements 160 match the positions of the qubits 104. The limited size of each collecting element 160 will act as a pinhole in the confocal detection scheme, and as such will suppress out of plane light.

The technologies used in the collection path 140 for collecting the light into a single mode optical structure 146, for example a waveguide or an optical fiber, can be the same as used in the excitation path 120, where these structures are used to emit light. As shown in FIG. 1, the collection path may comprise optical switches 144 that may be used to allow time multiplexing of the collected light into the same single mode output structure 150a (waveguide or optical fiber).

In **Error! Reference source not found.,** each collecting element 160 has two possible outputs 150a and 150b. One is the main output 150a towards the single mode optical fiber 146. The other is an output 150b to a single photon detector 148. Having two outputs 150 that can work in parallel enables to perform actions related to the charge and resonance checking (CR check) on one of the qubits 104, and in parallel perform the qubit control and readout on another of the qubits 104.

The system 100 of FIG. 1 comprises further a beam splitting element 180 and the optical excitation path 120 and the optical collection path 140 are combined using the beam splitting element 180. The beam splitting element 180 may be a polarizing beam splitter (PSB) or any other suitable beam splitting element.

### Quantum computing

The collection path 140 can be extended by a second output into a single mode optical fiber, by simply adding an additional row of optical switches to a common optical waveguide that is connected to an optical fiber. This would enable to perform Bell state measurements between any combination of two color centers, and as such will generate entanglement between these color centers. In this way a rudimentary quantum processor can be made. The capabilities of this quantum processor will be scalable by implementing even more output channels, resulting in effectively making an optical cross-bar switch. This would allow entanglement generation between multiple pairs of color centers in parallel.

FIG. 3A shows a flowchart of a method for controlling a plurality of qubits in a solid-state substrate according to an embodiment of the invention. In step 302, the method of FIG. 3A comprises optically exciting the plurality of qubits 104 using an array of light generating elements, wherein positions of the light generating elements correspond to the positions of the plurality of qubits

FIG. 3B shows a flowchart of a method for detecting a plurality of qubits in a solid-state substrate according to an embodiment of the invention. In step 306 of the method of FIG. 3B, photons emitted by the qubits in the solid-state substrate 102 are collected by using an array of collecting elements, wherein positions of the collecting elements correspond to the positions of the plurality of qubits.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A system (100) for parallel control and/or readout of qubits in a solid-state substrate, the system comprising:
- the solid-state substrate (102) comprising the plurality of qubits (104) positioned in an arbitrary pattern;
- an excitation path (120) comprising an array of light emitting elements, wherein positions of the light emitting elements correspond to positions of the plurality of the qubits;
- a collection path (140) comprising an array of light collecting elements, wherein positions of the light collecting elements correspond to the positions of the plurality of qubits; and
- a beam splitter (180) configured to combine the excitation path and the optical collection path.

2. The system of claim 1, further comprising an array of individual microwave antennas, each respectively corresponding to each of the plurality of qubits.

3. The system of claim 1, further comprising a single antenna and an integrated configuration of electromagnetic coils or wires for applying a magnetic field gradient to induce Zeeman splitting of the plurality of qubits.

4. The system of claim 1, wherein a distance between any two qubits among the plurality of qubits (104) is between 10 micrometer and 100 micrometers.

5. The system of claim 1, wherein the excitation path (120) further comprises optical switches for time multiplexing of the light sources required to control the qubits.

6. The system of claim 1, wherein the collection path (140) further comprises optical switches for time multiplexing collected light into a single mode output structure (146).

7. The system of claim 1, wherein the collection path (140) is configured to direct collected light to a single photon detector (148).

8. The system of claim 1, wherein the beam splitter (180) is a polarizing beam splitter.

9. The system of claim 1, wherein the electromagnetic coils or wires are made of a superconducting material.

10. The system of claim 1, wherein the solid-state substrate (102) is made of diamond, silicon carbide, SiC, or silicon.

11. A method for controlling a plurality of qubits in a solid-state substrate, the method comprising optically exciting (304) the plurality of qubits using an array of light emitting elements, wherein positions of the light emitting elements correspond to the positions of the plurality of qubits.

12. A method for method for reading out a plurality of qubits in a solid-state substrate, the method comprising collecting (306) photons emitted by the plurality of color centers using an array of collecting elements, wherein positions of the collecting elements correspond to the positions of the plurality of qubits.

13. The method of any of claims 11 or 12, further comprising applying a magnetic field gradient to induce Zeeman splitting of the plurality of qubits.
